# EUROPÄISCHE PATENTSCHRIFT

(11) **EP 2 206 225 B1**
(45) Veröffentlichungstag und Bekanntmachung des Hinweises auf die Patenterteilung: **05.06.2013**
(21) Anmeldenummer: 08802853.5
(22) Anmeldetag: 10.10.2008
(51) Int. Cl.: H02K 7/08, H02K 15/14, H02K 15/16

(54) **ELEKTROMOTORISCHER HILFSANTRIEB FÜR FAHRZEUGE SOWIE VERFAHREN ZUM HERSTELLEN BZW. MONTIEREN EINES SOLCHEN ANTRIEBS**
ELECTRIC-MOTOR AUXILIARY DRIVE FOR VEHICLES, AND METHOD FOR PRODUCING AND MOUNTING A DRIVE OF THIS TYPE
ENTRAINEMENT AUXILIAIRE PAR MOTEUR ELECTRIQUE POUR VEHICULES ET PROCEDE DE FABRICATION ET DE MONTAGE DE CET ENTRAÎNEMENT

(30) Priorität: 30.10.2007 DE 102007052057
(43) Veröffentlichungstag der Anmeldung: 14.07.2010
(73) Patentinhaber: Valeo Systèmes d'Essuyage, 78321 La Verrière (FR)
(72) Erfinder: STEFANI, Siegfried, 71739 Oberriexingen (DE)
(74) Vertreter: Rosolen-Delarue, Katell
(86) Internationale Anmeldenummer: PCT/EP2008/008559
(87) Internationale Veröffentlichungsnummer: WO 2009/056211

(56) Entgegenhaltungen:
- EP-A- 0 798 843
- DE-A1- 4 317 622
- US-A1- 2002 190 591

## Beschreibung

Die Erfindung bezieht sich auf einen elektromotorischen Hilfsantrieb für Fahrzeuge, insbesondere auf einen Scheibenwischerantrieb, gemäß Oberbegriff Patentanspruch 1 oder 3. Weiterhin bezieht sich die Erfindung auf ein Verfahren zum Herstellen bzw. Montieren eines solchen Antriebs.

Elektromotorische Hilfsantriebe für Fahrzeuge, speziell auch für Pkws oder dergleichen Straßenfahrzeuge sind in verschiedenen Ausführungen bekannt und bestehen beispielsweise aus einem Elektromotor u.a. mit einer Motor- oder Ankerwelle und aus einem nachgeschalteten Getriebe. Die Ankerwelle reicht dabei in der Regel in das Getriebe hinein und bildet dort beispielsweise eine Schnecke, die mit einem Schneckenrad des Getriebes zusammenwirkt. Bekannt sind insbesondere auch Ausführungen, bei denen die Ankerwelle mit insgesamt drei Lagern gelagert ist, die jeweils eine radiale Abstützung bewirken, und zwar beispielsweise mit zwei derartigen Lagern in einem Getriebegehäuse und mit einem Lager in einem Gehäuse des Elektromotors. Bei Hilfsantrieben dieser Art ist es dann erforderlich, dass die die radiale Abstützung der Ankerwelle bewirkenden Lager exakt fluchtend, d.h. exakt achsgleich miteinander angeordnet sind, ja jede Abweichung hiervon (nachstehend als "Fluchtfehler" bezeichnet) während des Betriebes zu einer sich ständig ändernden Durchbiegung der Ankerwelle mit der Gefahr eines frühzeitigen Wellenbruchs führt.

Aus der DE 43 17 622 A1 ist es bekannt, ein aus einem Elektromotor herausragendes, verlängert ausgebildetes Wellenende in eine Aufnahme eines Gehäuseteiles einzusetzen, wobei das Gehäuseteil eine Querschnitt in etwa U-förmige Aufnahme zur Anordnung des Wellenendes aufweist, und wobei das Wellenende im Bereich der Aufnahme eine radial umlaufende Ringnut aufweist. Eine axiale Verschiebung der Welle beim Anordnen des Wellenendes in der Aufnahme findet nicht statt.

Aus der EP 0 798 843 A2 ist darüber hinaus ein Hilfsantrieb mit einem Elektromotor bekannt, der über einen verlängerten Wellenabschnitt mit einem Getriebe gekoppelt ist. Das auf der dem Antriebsmotor gegenüberliegenden Seiten angeordnete Wellenende ist unter Ausbildung eines Lagers in einem Gehäuseelement gelagert. Mittels eines verstellbaren Anschlagelements lässt sich das Axialspiel der Welle einstellen, wobei jedoch ebenfalls keine axiale Verschiebung der Welle zum Einstellen eines radialen Lagerspieles vorgesehen ist.

Weiterhin ist aus der US 2002/0190591 A1 eine Anordnung bekannt, bei der die innerhalb eines Gehäuses angeordneten Elemente eines Elektromotors, insbesondere dessen Lager, auf einen dornartigen Stift angeordnet werden, der zur Ausrichtung der angesprochenen Bauteile in dem Gehäuse des Elektromotors dient, wobei nach dem Anordnen der Bauteile in dem Gehäuse der Dorn aus den Bauteilen herausgezogen wird.

Aufgabe der Erfindung ist es, einen elektromotorischen Hilfsantrieb aufzuzeigen, der bei vereinfachter Ausbildung u.a. auch eine möglichst fluchtfehlerfreie Anordnung von die Welle des Hilfsantriebs radial abstützenden Lagern ermöglicht sowie es auch ermöglicht, in einfacher Weise die Herstellung und/oder Montage auf eventuelle Fluchtfehler der Lager zu überwachen.

Zur Lösung dieser Aufgabe ist ein Hilfsantrieb entsprechend dem Patentanspruch 1 oder 3 ausgebildet. Ein Verfahren zum Herstellen bzw. Montieren eines elektromotorischen Hilfsantriebes ist Gegenstand der Patentansprüche 18 oder 19.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: in vereinfachter Schnittdarstellung einen elektromotorischen Hilfsantrieb für Fahrzeuge in Form eines Scheibenwischerantriebs im Wesentlichen bestehend aus einem Elektromotor mit Motor- und Ankerwelle sowie aus einem Getriebe, und zwar vor dem Verbinden bzw. Anflanschen des Elektromotors am Getriebe;
- Fig. 2: in den Positionen a) - c) jeweils in einer vergrößerten Teildarstellung ein im Getriebegehäuse ausgebildetes Gleitlager der Ankerwelle des Hilfsantriebs der Figur 1 in unterschiedlichen Zuständen;
- Fig. 3: eine Darstellung wie Figur 1 bei einer weiteren Ausführungsform eines elektromotorischen Hilfsantriebs in Form eines Scheibenwischerantriebs der Erfindung;
- Fig. 4: in den Positionen a) - c) jeweils in einer vergrößerten Teildarstellung ein im Getriebegehäuse ausgebildetes Gleitlager der Ankerwelle des Hilfsantriebs der Figur 3 in unterschiedlichen Zuständen.

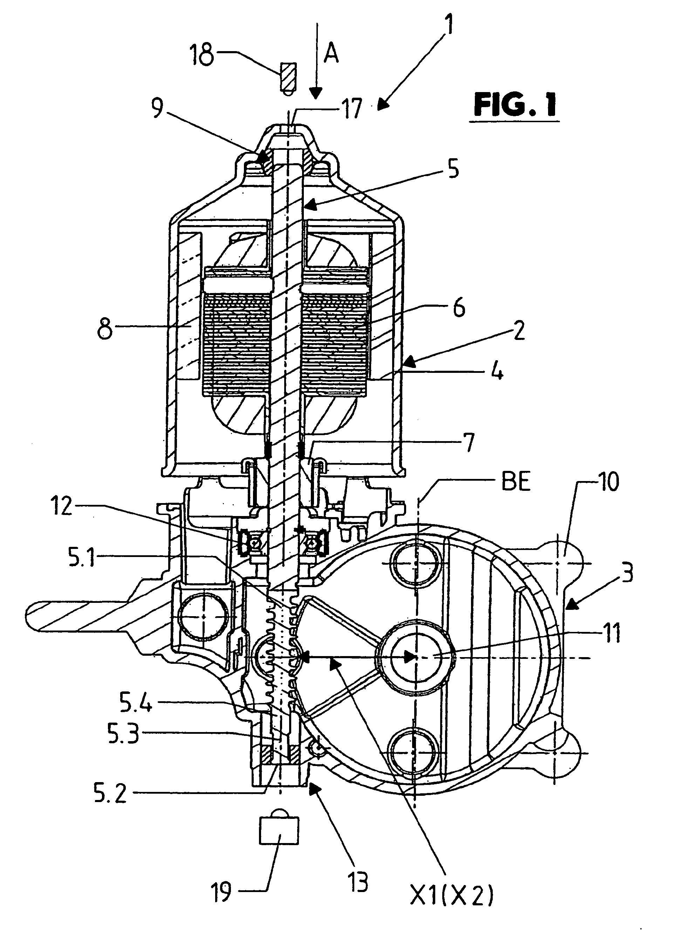

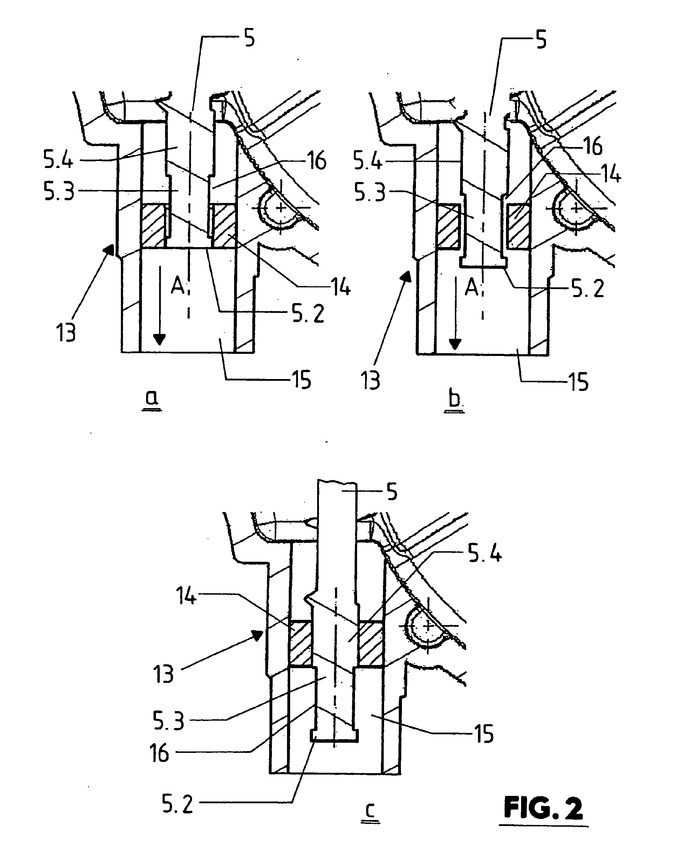

In den Figuren 1 und 2 ist 1 ein elektromotorischer Hilfsantrieb für Fahrzeuge, insbesondere für Pkws oder dergleichen Straßenfahrzeuge, in Form eines Scheibenwischerantriebs im Wesentlichen bestehend aus einem Elektromotor 2 und aus einem als Schneckengetriebe ausgebildeten Getriebe 3.

Der Elektromotor 2 umfasst u.a. ein topfartiges Motorgehäuse 4 (Motortopf), eine Motor- oder Ankerwelle 5, einen auf der Ankerwelle 5 vorgesehenen, im Wesentlichen aus einem Blechpaket und einer Ankerwicklung bestehenden Anker 6, einen ebenfalls auf der Ankerwelle vorgesehenen Kommutator 7 sowie einen Stator 8, der bei der dargestellten Ausführungsform von Permanentmagneten gebildet und an der Innenseite des Gehäuses 4 vorgesehen ist. Mit einem Ende ist die Ankerwelle 5 mit einem ersten, bei der dargestellten Ausführungsform als Gleit- oder Kalottenlager ausgeführten Lager 9 an der geschlossenen Seite des topfartigen Motorgehäuses 4 drehbar gelagert.

Bei montiertem Antrieb 1 reicht die Ankerwelle 5 mit dem Kommutator 7 sowie mit einer sich an den Kommutator 7 anschließenden Teillänge in das Innere eines Getriebegehäuses 10 des Getriebes 3 hinein und ist dort mit einem schneckenförmigen Abschnitt 5.1 versehen, der bei vollständig montiertem Hilfsantrieb 1 mit einem in der Figur 1 nicht dargestellten Getriebe- oder Schneckenrad zusammenwirkt, welches auf einer ebenfalls nicht dargestellten Ausgangswelle des Hilfsantriebs 1 angeordnet und mit dieser in einem Lager 11 im Getriebegehäuse 10 drehbar gelagert ist, wie dies dem Fachmann bekannt ist.

Im Getriebegehäuse 10 ist die Ankerwelle 5 zwischen dem Abschnitt 5.1 und dem Kommutator 7 mit einem bei der dargestellten Ausführungsform als Kugellager ausgebildeten zweiten Lager 12 gelagert. An ihrem dem Motorgehäuse 4 entfernt liegenden zweiten Ende ist die Ankerwelle 5 schließlich in einem bei der dargestellten Ausführungsform als Gleitlager ausgeführten dritten Lager 13 gelagert.

Dieses dritte Lager 13 ist in der Figur 2 im Detail dargestellt. Es besteht im Wesentlichen aus einer ringartigen Lagerbuchse 14, die ebenso wie die Lagerbuchse des Lagers 9 aus einem für derartige Lager geeigneten Material, z.B. aus einem metallischen Werkstoff (auch Sintermaterial) gefertigt und in einem hülsenartigen, zur Außenseite des Getriebegehäuses 10 hin offenen Gehäuseabschnitt 15 des Getriebegehäuses 10 aufgenommen ist.

Die Ankerwelle 5 ist im Bereich des Lagers 13 bzw. der dortigen Lagerbuchse 14 mit einer Querschnittseinschnürung 16 (Einstich oder Ringnut) ausgebildet, so dass sich im Bereich dieser Querschnittseinschnürung drei Ankerwellenabschnitte 5.2 - 5.4 ergeben, und zwar ausgehend von dem freien Ende der Ankerwelle 5 der Abschnitt 5.2 mit einem kreiszylinderförmigen Außendurchmesser, der gleich dem Innendurchmesser der kreiszylinderförmigen Lageröffnung der Lagerbuchse 14 ist, daran anschließend der Abschnitt 5.3 mit einem gegenüber der Lageröffnung der Lagerbuchse 14 reduziertem Außendurchmesser und daran anschließend der Abschnitt 5.4 mit einem kreiszylinderförmigen Außendurchmesser, der wiederum gleich dem Innendurchmesser der Lageröffnung der Lagerbuche 14 ist. Bei der dargestellten Ausführungsform besitzen die Abschnitte 5.2 und 5.4 denselben Außendurchmesser, der Abschnitt 5.2 ist nur mit einer sehr kurzen axialen Länge ausgebildet. Die axiale Länge des Abschnittes 5.3 ist wenigstens gleich, d.h. bei der dargestellten Ausführungsform etwas größer als die axiale Länge, die Lagerbuchse 14 in Achsrichtung der Ankerwelle 5 aufweist.

Die Montage des elektromotorischen Hilfsantriebs 1 erfolgt z.B. in der Weise, dass zunächst Ankerwelle 5 mit Anker 6, Kommutator 7 und Lager 12 auf das Getriebegehäuse 10 derart aufgesetzt wird, dass das Lager 12 in der für dieses Lager vorgesehenen Lageraufnahme des Getriebegehäuses 10 und der Ankerwellenabschnitt 5.2 in der im Getriebegehäuse 10 vormontierten Lagerbuchse 14 aufgenommen sind, die Ankerwelle 5 also im Getriebegehäuse 10 an zwei räumlich voneinander getrennten Bereichen, nämlich am Lager 12 und am Lager 13 bzw. an dem in die Lagerbuchse 14 eingreifenden Wellenabschnitt 5.2 u.a. radial abgestützt ist und somit eine vorgegebene Orientierung in Bezug auf das Getriebegehäuse 10 aufweist. Im Anschluss daran wird das Motorgehäuse 4 mit den in diesem Gehäuse vormontierten Komponenten auf die Ankerwelle 5 aufgesetzt, so dass diese im Lager 9 aufgenommenen ist. Durch axiales Verschieben relativ zu der Ankerwelle 5 wird das Motorgehäuse 4 mit seiner offenen Seite an das Getriebegehäuse 10 heranbewegt und mit dem Getriebegehäuse 10 in geeigneter Weise verbunden, beispielsweise durch Verschrauben, wobei insbesondere auch durch die Ausbildung des Lagers 9 als Kalottenlager ein Ausrichten des Motorgehäuses 4 relativ zu der Ankerwelle 5 möglich ist.

Um eventuelle Fluchtfehler der drei Lager 9, 12 und 13 zu erfassen, wird in diesem ersten Zustand des Lagers 13 (Position a) der Figur 2), in dem die Ankerwelle 5 mit dem Wellenabschnitt 5.2 im Lager 13 radial abgestützt ist, in einer ersten Messung die Lage der Ankerwelle 5, beispielsweise die Lage des in dem noch offenen Getriebegehäuse 10 aufgenommenen Abschnittes 5.1 mit einer geeigneten Messeinrichtung erfasst, und zwar bezogen auf einen geeigneten Bezugspunkt oder eine geeignete Bezugsebene, wie dies in der Figur 1 mit der Bezugsebene BE und dem Abstand x1 vereinfacht angedeutet ist. Die Bezugsebene BE ist dabei beispielsweise eine Ebene, die parallel zur Achse der Ankerwelle 5 orientiert ist und außerdem die Achse des Lagers 11 einschießt.

Nach der ersten Messung erfolgt mit einem geeigneten Werkzeug, beispielsweise mit einem Dorn, der durch eine Öffnung 17 auf das im Motorgehäuse 4 gelagerte Ende der Ankerwelle 5 mit axialer Druckkraft einwirkt, ein axiales Verschieben der Ankerwelle 5 in Richtung des Pfeils A der Figur 1 in der Weise, dass nach diesem axialen Verschieben die Querschnittseinschnürung 16 bzw. der von dieser Einschnürung gebildete Wellenabschnitt 5.3 in der Lagerbuchse 15 aufgenommen ist und dadurch das betreffende Ende der Ankerwelle 5 nicht mehr durch das Lager 13 radial abgestützt ist (Position b) der Figur 2). Es folgt dann eine zweite Messung des Abstandes x2 von der Bezugsebene BE. Beide Messungen werden verglichen. Sind die bei diesen Messungen gemessenen Abstände x1 und x2 unterschiedlich, so bedeutet dies, dass die bei der zweiten Messung nicht mehr durch das Lager 13 radial abgesetzte Ankerwelle 5 aufgrund eines Fluchtfehlers der Lager 9, 12 und 13 ausgewichen ist. Aus der Differenz der Abstände x1 und x2 kann die Größe des Fluchtfehlers bestimmt werden. Liegt der Fluchtfehler außerhalb eines zulässigen Toleranzbereichs, so wird die weitere Montage des Hilfsantriebes 1 beispielsweise abgebrochen und dieser Antrieb bzw. dessen Komponenten werden einer Nachbearbeitung zugeführt. Liegt der Fluchtfehler innerhalb eines zulässigen Toleranzbereichs, so erfolgt in einem weiteren Montageschritt ein weiteres axiales Verschieben der Ankerwelle 5 in Richtung des Pfeils A beispielsweise wiederum mit dem durch die Öffnung 17 axial auf die Ankerwelle 5 einwirkenden Dornes, so dass dann der Wellenabschnitt 5.4 in der Lagerbuchse 14 aufgenommen ist (Position c) der Figur 2) und somit die Ankerwelle 5 in allen drei Lagern 9, 12 und 13 radial abgestützt gelagert ist. Über die Öffnung 17 sowie über das offene Ende des Gehäuseabschnittes 15 erfolgt dann noch die notwendige axiale Abstützung der Ankerwelle 5 durch Einsetzen bzw. Montieren von Lagerelementen 18 und 19, die als axiales Stützlager wirken.

Wie vorstehend beschrieben, kann das Lager 13 also durch axiales Verschieben der Ankerwelle 5 nur in einer einzigen Richtung (Pfeil A) drei unterschiedliche Zustände einnehmen, nämlich
einen ersten Zustand, der in der Position a) der Figur 2 gezeigt ist und in dem der Ankerwellenabschnitt 5.2 in der Lagerbuchse 14 aufgenommen und radial abgestützt ist und in welchem die Ankerwelle 5 im Getriebegehäuse 10 durch die beiden Lager 12 und 13 für eine in Bezug auf die Ankerwelle 5 ausgerichtete Montage des Motorgehäuses 3 in einer festen Orientierung angeordnet ist,
einen zweiten Zustand, der in der Position b) der Figur 2 gezeigt ist und in dem der Wellenabschnitt 5.3 in der Lagerbuchse 14 aufgenommen ist und somit eine radiale Abstützung der nunmehr in den Lagern 9 und 12 gelagerten Ankerwelle 5 am Lager 13 fehlt, sowie
einen dritten Zustand, der in der Position c) der Figur 2 gezeigt ist und in dem die in den Lagern 9 und 12 gelagerte Ankerwelle 5 mit ihrem Wellenabschnitt 5.4 auch im Lager 13 radial abgestützt gelagert ist und der dem endgültigen Montagezustand der dreifachen Lagerung der Ankerwelle 5 entspricht.

Grundsätzlich kann der elektromotorische Hilfsantrieb 1 auch so ausgeführt sein, dass bereits der zweite Zustand des Lagers13 (Position b) der Figur 2), in dem der Wellenabschnitt 5.3 in der Lagerbuchse 14 aufgenommen ist, den Endzustand bzw. den endgültigen Montagezustand bildet, so dass das Lager 13 dann mit dem in den Gehäuseabschnitt 15 eingesetzten Lagerstück 19 als reines axiales Stützlager oder Axiallager wirkt.

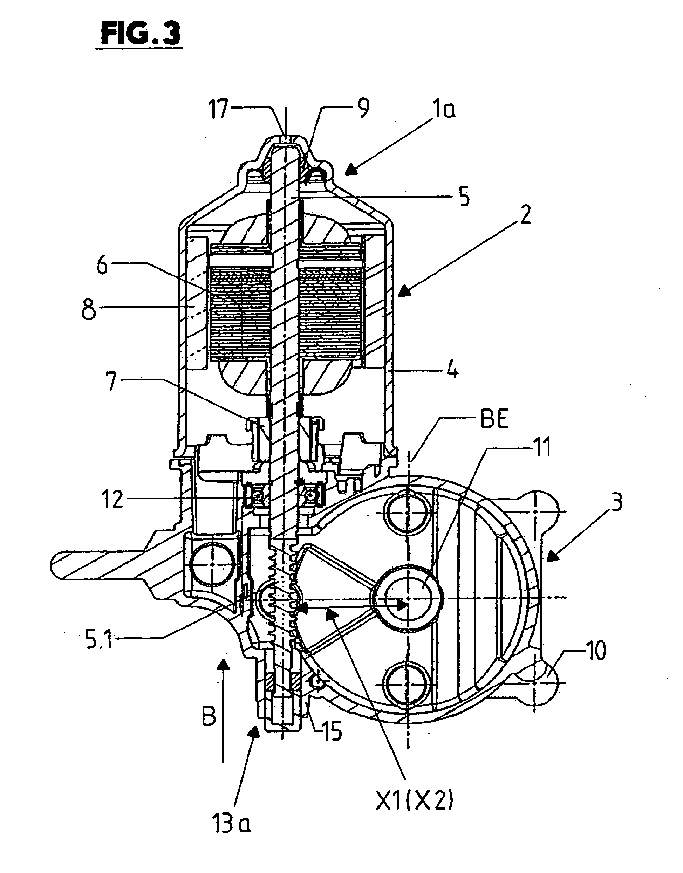

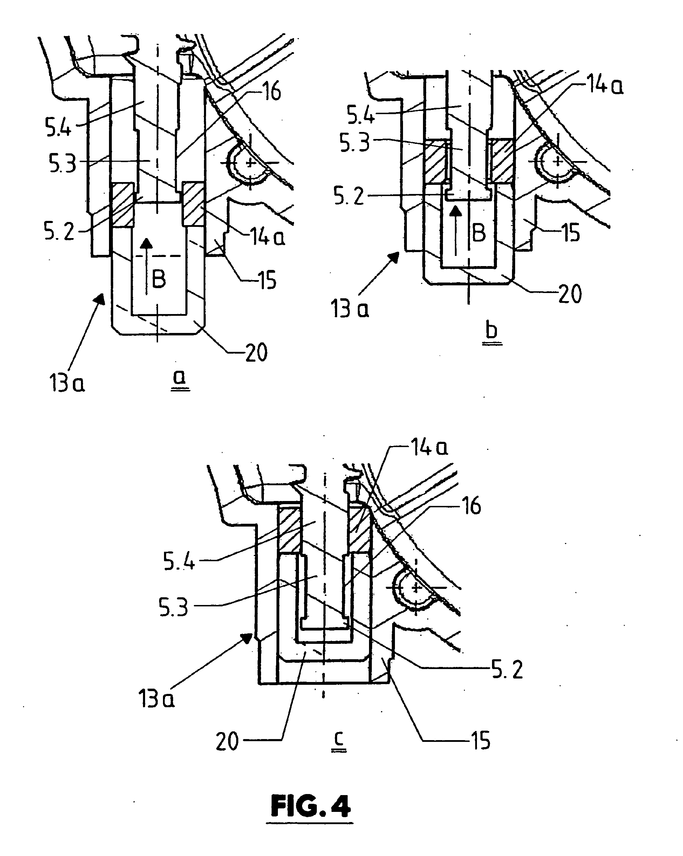

Die Figuren 3 und 4 zeigen in Darstellungen wie die Figuren 1 und 2 als weitere Ausführungsform einen elektromotorischen Hilfsantrieb 1a, der sich von dem Hilfsantrieb 1 lediglich dadurch unterscheidet, dass im Getriebegehäuse 10 bzw. im Gehäuseabschnitt 15 anstelle des Lagers 13 ein Lager 13a als drittes Lager für die Ankerwelle 5 vorgesehen ist. Das Lager 13a besteht dabei im Wesentlichen aus der der Lagerbuchse 14 entsprechenden Lagerbuchse 14a sowie aus einer zumindest im endgültigen Montagezustand in den hülsenartigen Gehäuseabschnitt 15 eingesetzten Kappe 20, die u.a. zur Abdichtung des Getriebegehäuses 10 am Gehäuseabschnitt 15 sowie gegebenenfalls auch als axiales Stützlager dient.

Die Ankerwelle 5 ist an ihrem mit der Lagerbuchse 14a zusammen wirkenden Ende wiederum mit den drei Wellenabschnitten 5.2, 5.3 und 5.4 versehen, so dass das Lager 13a ebenfalls die drei Zustände aufweisen kann, und zwar den ersten Zustand, in dem der Abschnitt 5.2 in der Öffnung der Lagerbuchse 14a aufgenommen ist (Position a) der Figur 4) und dadurch die Ankerwelle 5 durch die beiden Lager 12 und 13a radiel abgestützt eine vorgegebene Orientierung im Getriebegehäuse 10 aufweist. In diesem Zustand erfolgt dann nach dem axialen Aufschieben des Motorgehäuses 4 mit dem Lager 9 auf Ankerwelle 5 das Verbinden des Motorgehäuses 4 mit dem Getriebegehäuse 10 bei gleichzeitigem Toleranzausgleich zur möglichst achsgleichen Anordnung sämtlicher Lager 9, 12 und 13a. Durch die Ausbildung des Lagers 9 als Kalottenlager ist wiederum ein Ausrichten der Lage der Achse des Motorgehäuses 5 relativ zur Lage der Ankerwelle 5 in einem zulässigen Toleranzbereich möglich.

Bei offenem Getriebegehäuse 10 und noch nicht montiertem Getriebe- oder Schneckenrad wird in dem ersten Zustand des Lagers 13a in einer ersten Messung der Abstand x1 bestimmt. Im Anschluss daran wird das Lager 13a in den zweiten Zustand überführt, und zwar dadurch, dass die Lagerbuchse 14 mit einem geeigneten Werkzeug, beispielsweise auch unter Verwendung der Kappe 20, axial soweit in das Innere des Getriebegehäuses 10 verschoben wird, dass nunmehr der Abschnitt 5.3 der Ankerwelle 5 in der Lagerbuchse 14a aufgenommen ist, also eine radiale Abstützung der Ankerwelle 5 über das Lager 13a nicht mehr erfolgt, sondern ausschließlich über die Lager 9 und 12. In diesem zweiten Zustand wird der Abstand x2 gemessen. Aus der Differenz zwischen den Abständen x1 und x2 kann wiederum darauf geschlossen werden, ob ein Fluchtfehler der Lager 9, 12 und 13a vorliegt und dieser möglicherweise einen vorgegebenen Toleranzbereich überschreitet. Ist dies der Fall wird die weitere Montage des Hilfsantriebes 1 beispielsweise abgebrochen und der Antrieb bzw. dessen Komponenten werden einer Nachbearbeitung zugeführt. Wird kein Fluchtfehler festgestellt oder liegt dieser innerhalb eines zulässigen Toleranzbereichs, so erfolgt durch ein weiteres axiales Verschieben der Lagerbuchse 14a in Richtung des Pfeils B, beispielsweise wiederum über die Kappe 20, das Überführen des Lagers 13a in den dritten, endgültigen Montagezustand, in dem der Abschnitt 5.4 der Ankerwelle 5 in der Lagerbuchse 14a aufgenommen und die Ankerwelle 5 somit in den drei Lagern 9, 12 und 13a radial abgestützt gelagert ist.

Für die axiale Abstützung dient bei entsprechender Ausbildung beispielsweise das Lager 12 oder aber ein axiales Stützlager im Bereich des Lagers 9 entsprechend dem Lagerelement 18 sowie die als axiales Stützlager ausgeführte Kappe 20.

Die Erfindung wurde voranstehend an Ausführungsbeispielen beschrieben. Diesen ist gemeinsam, dass durch eine axiale Verschiebung der Ankerwelle 5 oder der Lagerbuchse 14a jeweils nur in einer einzigen Achsrichtung die drei Zustände für das Lager 13 bzw. 13a erreichbar sind. Hierdurch ist die Zustandsänderung für das Lager 13 bzw. 13a mit einem geringem Aufwand, insbesondere auch mit einem geringen Werkzeugaufwand während der Montage des Hilfsantriebes 1 bzw. 1a möglich. Dem beschriebenen Ausführungsform ist weiterhin gemeinsam, dass die Zustandsänderung des dritten Lagers 13 bzw. 13a durch ein Verschieben der Ankerwelle 5 bzw. der Lagerbuchse 14a jeweils von der Außenseite des Motorgehäuses 4 bzw. des Getriebegehäuses 10 her in Richtung zum Inneren des Getriebegehäuses hin erfolgt, dieses Verschieben also mit einem relativ einfachen Werkzeug von der Außenseite des Motorgehäuses 3 oder Getriebegehäuse 10 durchgeführt werden kann.

Den Hilfsantrieben 1 und 1a ist weiterhin gemeinsam, dass dann, wenn das dritte Lager 13 bzw. 13a im Endzustand, d.h. im dritten Zustand ein Radiallager bildet, die gesamte axiale Länge der Lagerbuchse 14 bzw. 14a die mit dem Wellenabschnitt 5.4 zusammenwirkende Lagerfläche bildet.

Vorstehend wurde der einfachen Erläuterung wegen davon ausgegangen, dass die Messungen der Abstände x1 und x2 jeweils nur eine Achsrichtung erfolgen. Bevorzugt werden diese Abstandsmessungen aber jeweils in wenigstens zwei senkrecht zueinander verlaufenden und radial zur Achse der Ankerwelle 5 orientierten Achsrichtungen durchgeführt. Die Messungen erfolgen dabei beispielsweise bei der Montage eines jeden Hilfsantriebes 1 bzw. 1a oder aber nur strichprobenartig, um beispielsweise sich in die Fertigung einschleichende Toleranzen rechtzeitig zu erkennen und entsprechende Gegenmaßnahmen einleiten zu können.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

| | |
|---|---|
| 1, 1a | Elektromotorischer Hilfsantrieb |
| 2 | Elektromotor |
| 3 | Getriebe |
| 4 | Motorgehäuse |
| 5 | Motor- oder Ankerwelle |
| 5.1 - 5.4 | Ankerwellenabschnitt |
| 6 | Anker |
| 7 | Kommutator |
| 8 | Stator |
| 9 | Lager |
| 10 | Getriebegehäuse |
| 10.1 | Gehäuseabschnitt |
| 11 | Lager für Ausgangswelle des Getriebes |
| 12 | zweites Lager der Ankerwelle |
| 13, 13a | drittes Lager der Ankerwelle |
| 14, 14a | Lagerbuchse |
| 15 | Gehäuseabschnitt |
| 16 | Querschnittseinschnürung in der Ankerwelle 5 |
| 17 | Öffnung im Motorgehäuse 4 |
| 18, 19 | Lagerstück zur axialen Abstützung |
| 20 | Kappe |
| A | axiale Bewegung der Ankerwelle 5 zur Zustandsänderung des dritten Lagers 13 |
| B | axiale Bewegung der Lagerbuchse 14a zur Zustandsänderung des dritten Lagers 13a |
| BE | Bezugsebene |
| x1, x2 | Abstand |

## Patentansprüche

1. Elektromotorischer Hilfsantrieb für Fahrzeuge, insbesondere Scheibenwischerantrieb, mit einem Elektromotor (2) und einem Getriebe (3), mit wenigstens zwei miteinander verbundenen Gehäuseelementen (4, 10) sowie mit einer Welle (5), die in einem ersten Gehäuseelement (4) mit wenigstens einem ersten Lager (9) und in einem zweiten Gehäuseelement (10) mit wenigstens einem zweiten und dritten Lager (12, 13) gelagert ist,
**dadurch gekennzeichnet,**
**dass** das dritte Lager (13) ein Lagerelement, insbesondere eine Lagerbuchse (14) aufweist, das mit der Welle (5) zusammenwirkt, dass die Welle (5) im Bereich des dritten Lagers (13) wenigstens zwei axial aneinander anschließende Wellenbereiche (5.2 - 5.4) aufweist, dass in einem ersten Zustand ein erster Wellenbereich (5.4) eine radiale Abstützung für die Welle (5) ausbildet, dass in einem zweiten Zustand ein zweiter Wellenbereich (5.3) für die Welle (5) keine radiale Abstützung ausbildet, und dass die Welle (5) in Axialrichtung zum Lagerelement zumindest zwischen dem ersten und dem zweiten Wellenbereich (5.3, 5.4) verschiebbar ist.

2. Hilfsantrieb nach Anspruch 1,
**dadurch gekennzeichnet,**
**dass** die Welle (5) zur Ausbildung eines dritten Zustands einen dritten Wellenbereich (5.2) aufweist, in dem dieser eine radiale Abstützung für die Welle (5) ausbildet, dass der dritte Wellenbereich (5.2) auf der dem ersten Wellenbereich (5.4) gegenüberliegenden Seite des zweiten Wellenbereich (5.3) angeordnet ist, und dass die Welle (5) durch Axialverschiebung in ein- und dieselbe Richtung vom ersten in den zweiten Zustand und von zweiten in den dritten Zustand gelangt.

3. Elektromotorischer Hilfsantrieb für Fahrzeuge, insbesondere Scheibenwischerantrieb, mit einem Elektromotor (2) und einem Getriebe (3), mit wenigstens zwei miteinander verbundenen Gehäuseelementen (4,10) sowie mit einer Welle (5), die in einem ersten Gehäuseelement (4) mit wenigstens einem ersten Lager (9) und in einem zweiten Gehäuseelement (10) mit wenigstens einem zweiten und einem dritten Lager (12, 13a) gelagert ist,
**dadurch gekennzeichnet,**
**dass** das dritte Lager (13a) von einem mit der Welle (5) zusammenwirkenden Lagerelement, insbesondere einer Lagerbüchse (14a) gebildet ist, dass die Welle (5) im Bereich des dritten Lagers (13a) drei axial aneinander anschließende Wellenbereiche (5.2 bis 5.4) aufweist, dass in einem ersten Zustand und in einem dritten Zustand ein erster Wellenbereich (5.4) und ein dritter Wellenbereich (5.2) eine radiale Abstützung für die Welle (5) ausbilden, dass in einem zweiten Zustand ein zweiter Wellenbereich (5.3) keine radiale Abstützung für die Welle (5) ausbildet, und dass das Lagerelement axial relativ zu den drei Wellenbereichen (5.2 bis 5.4) in axialer Richtung verschiebbar angeordnet ist.

4. Hilfsantrieb nach einem der vorhergehenden Ansprüche,
**dadurch gekennzeichnet, dass** das erste und/oder dritte Lager (9, 13, 13a) an einem Ende der Welle (5) vorgesehen sind.

5. Hilfsantrieb nach einem der vorhergehenden Ansprüche,
**dadurch gekennzeichnet, dass** der Zustand des dritten Lagers (13, 13a) durch axiales Einwirken auf die Welle (5) oder auf das Lagerelement (14a) von der Außenseite des ersten Gehäuseelementes (4) oder des zweiten Gehäuseelementes (10) veränderbar ist.

6. Hilfsantrieb nach einem der vorhergehenden Ansprüche,
**dadurch gekennzeichnet, dass** das erste Gehäuseelement ein Motorgehäuse (4) oder ein Teil eines Motorgehäuses des Elektromotors (3) und das zweite Gehäuseelement ein Getriebegehäuse (10) oder ein Teil eines Getriebegehäuses des Getriebes (3) sind.

7. Hilfsantrieb nach einem der vorhergehenden Ansprüche,
**dadurch gekennzeichnet, dass** das erste Gehäuseelement ein Getriebegehäuse (10) oder ein Teil des Getriebegehäuses (10) des Getriebes (3) und das zweite Gehäuseelement ein Motorgehäuse (4) oder ein Teil eines Motorgehäuses (4) des Elektromotors (3) sind.

8. Hilfsantrieb nach einem der vorhergehenden Ansprüche,
**dadurch gekennzeichnet, dass** das erste und zweite Lager (9, 12) eine radiale Abstützung der Welle (5) bewirken.

9. Hilfsantrieb nach einem der vorhergehenden Ansprüche,
**dadurch gekennzeichnet, dass** das erste und/oder dritte Lager (9, 13, 13a) als Gleitlager ausgeführt sind

10. Hilfsantrieb nach einem der vorhergehenden Ansprüche,
**dadurch gekennzeichnet, dass** das zweite Lager (12) als Kugellager ausgeführt ist.

11. Hilfsantrieb nach einem der vorhergehenden Ansprüche, **gekennzeichnet durch** Lagerelemente oder Lagerstücke (18, 19, 20) zur axialen Abstützung der Welle (5).

12. Hilfsantrieb nach einem der vorhergehenden Ansprüche, **dadurch gekennzeichnet, dass** die Welle eine in das Getriebegehäuse (10) hineinreichende Ankerwelle (5) ist.

13. Hilfsantrieb nach einem der vorhergehenden Ansprüche, **dadurch gekennzeichnet, dass** die Welle (5) am dritten Lager (13, 13a) und das dortige Lagerelement (14, 14a) im Bereich ihrer einander zugewandten Flächen derart ausgebildet sind, dass zumindest im ersten und/oder dritten Zustand des dritten Lagers (13, 13a) die Welle (5) mit radialer Abstützung gegen wenigstens eine Lagerfläche des Lagerelementes (14, 14a) anliegt und im zweiten Zustand des dritten Lagers (13, 13a) einen radialen Abstand von den Lagerflächen des Lagerelementes (14, 14a) aufweist.

14. Hilfsantrieb nach einem der Vorhergebenden Ansprüche **dadurch gekennzeichnet, dass** der erste Wellenabschnitt (5.2) im Vergleich zum zweiten und/oder dritten Wellenabschnitt (5.3, 5.4) eine verkürzte axiale Länge aufweist.

15. Hilfsantrieb nach einem der vorhergehenden Ansprüche, **dadurch gekennzeichnet, dass** der zweite und/oder dritte Wellenabschnitt (5.2, 5.4) von einem ringartigen Vorsprung an der Welle (5) gebildet sind.

16. Hilfsantrieb nach einem der vorhergehenden Ansprüche, **dadurch gekennzeichnet, dass** der erste und dritte Wellenabschnitt (5.2, 5.4) jeweils von der Umfangsfläche der Welle (5) und der zweite Wellenabschnitt (5.3) von einer Querschnittseinschnürung (16) gebildet sind.

17. Hilfsantrieb nach einem der vorhergehenden Ansprüche, **dadurch gekennzeichnet, dass** das Lagerelement (14, 14a) des dritten Lagers (13, 13a) axial aneinander anschließend wenigstens zwei Abschnitte bildet, und zwar zumindest einen ersten Abschnitt, der im ersten Zustand des dritten Lagers (13, 13a) die Welle (5) mit axialer Abstützung aufnimmt und einen zweiten Abschnitt, der im zweiten Zustand des dritten Lagers die Welle (5) mit radialem Abstand und damit ohne radiale Abstützung aufnimmt.

18. Verfahren zum Herstellen oder Montieren eines elektromotorischen Hilfsantriebes nach einem der Ansprüche 1-17, **dadurch gekennzeichnet, dass** die Welle (5) mit dem zweiten Lager (12) und dem dritten, im ersten Zustand befindlichen Lager (13, 13a) im zweiten Gehäuseelement (10) angeordnet wird, dass dann das mit dem ersten Lager (9) an der Welle (5) geführte erste Gehäuseelement (4) mit dem zweiten Gehäuseelement (10) verbunden wird, und dass dann durch axiales Verschieben der Welle (5) das dritte, als axiales Stützlager ausgebildete Lager in dem zweiten Zustand gebracht wird.

19. Verfahren zum Herstellen oder Montieren eines elektromotorischen Hilfsantriebes nach einem der Ansprüche 1-17, **dadurch gekennzeichnet, dass** die Welle (5) mit dem zweiten Lager (12) und dem dritten, im ersten Zustand befindlichen Lager (13, 13a) im zweiten Gehäuseelement (10) angeordnet wird, dass dann das mit dem ersten Lager (9) an der Welle (5) geführte erste Gehäuseelement (4) mit dem zweiten Gehäuseelement (10) verbunden wird, dass dann die Lage der Welle (5) zur Erzeugung wenigstens eines ersten Messwertes (x1) vermessen wird, dass anschließend das dritte Lager (13, 13a) in den zweiten, die Welle (5) radial nicht abstützenden Zustand gebracht wird, dass erneut die Lage der Welle (5) zur Erzeugung wenigstens eines zweiten Messwertes (x2) vermessen wird, und dass unter Berücksichtigung des ersten und zweiten Messwertes (x1, x2) ein eventueller Fluchtfehler der Lager (9, 12, 13, 13a) ermittelt wird.

20. Verfahren nach Anspruch 19, **dadurch gekennzeichnet, dass** die Montage des Hilfsantriebes fortgesetzt und hierbei das dritte Lager (13, 13a) in seinen dritten Zustand gebracht wird, wenn ein Fluchtfehler nicht ermittelt wurde oder ein ermittelte Fluchtfehler innerhalb eines zulässigen Toleranzbereichs liegt.

## Claims

1. Electric-motor auxiliary drive for vehicles, in particular window wiper drive, with an electric motor (2) and a gearing (3), with at least two interconnected housing elements (4, 10) and with a shaft (5) which is mounted in a first housing element (4) by at least one first bearing (9) and in a second housing element (10) by at least one second and third bearing (12, 13), **characterized in that** the third bearing (13) has a bearing element, in particular a bearing bushing (14), which interacts with the shaft (5), **in that** the shaft (5) in the region of the third bearing (13) has at least two shaft regions (5.2-5.4) adjoining one another axially, **in that**, in a first state, a first shaft region (5.4) forms a radial support for the shaft (5), **in that**, in a second state, a second shaft region (5.3) does not form a radial support for the shaft (5), and **in that** the shaft (5) is displaceable at least between the first and the second shaft region (5.3, 5.4) in the axial direction with respect to the bearing element.

2. Auxiliary drive according to Claim 1, **characterized in that**, in order to form a third state, the shaft (5) has a third shaft region (5.2) in which said shaft region forms a radial support for the shaft (5), **in that** the third shaft region (5.2) is arranged on that side of the second shaft region (5.3) which is opposite the first shaft region (5.4), and **in that** the shaft (5) passes from the first into the second state and from the second into the third state by axial displacement in one and the same direction.

3. Electric-motor auxiliary drive for vehicles, in particular window wiper drive, with an electric motor (2) and a gearing (3), with a least two interconnected housing elements (4, 10) and with a shaft (5) which is mounted in a first housing element (4) by at least one first bearing (9) and in a second housing element (10) by at least one second and third bearing (12, 13a), **characterized in that** the third bearing (13a) is formed by a bearing element interacting with the shaft (5), in particular a bearing bushing (14a), **in that** the shaft (5) in the region of the third bearing (13a) has three shaft regions (5.2 to 5.4) adjoining one another axially, **in that**, in a first state and in a third state, a first shaft region (5.4) and a third shaft region (5.2) form a radial support for the shaft (5), **in that**, in a second state, a second shaft region (5.3) does not form a radial support for the shaft (5), and **in that** the bearing element is arranged displaceably in the axial direction axially relative to the three shaft regions (5.2 to 5.4).

4. Auxiliary drive according to one of the preceding claims, **characterized in that** the first and/or third bearing (9, 13, 13a) are/is provided at one end of the shaft (5).

5. Auxiliary drive according to one of the preceding claims, **characterized in that** the state of the third bearing (13, 13a) is changeable by axial action on the shaft (5) or on the bearing element (14a) from the outside of the first housing element (4) or of the second housing element (10).

6. Auxiliary drive according to one of the preceding claims, **characterized in that** the first housing element is a motor housing (4) or a part of a motor housing of the electric motor (3) and the second housing element is a gearing housing (10) or a part of a gearing housing of the gearing (3).

7. Auxiliary drive according to one of the preceding claims, **characterized in that** the first housing element is a gearing housing (10) or a part of the gearing housing (10) of the gearing (3) and the second housing element is a motor housing (4) or a part of a motor housing (4) of the electric motor (3).

8. Auxiliary drive according to one of the preceding claims, **characterized in that** the first and second bearings (9, 12) bring about a radial support of the shaft (5).

9. Auxiliary drive according to one of the preceding claims, **characterized in that** the first and/or third bearing (9, 13, 13a) are/is designed as (a) plain bearings (bearing).

10. Auxiliary drive according to one of the preceding claims, **characterized in that** the second bearing (12) is in the form of a ball bearing.

11. Auxiliary drive according to one of the preceding claims, **characterized by** bearing elements or bearing components (18, 19, 20) for axially supporting the shaft (5).

12. Auxiliary drive according to one of the preceding claims, **characterized in that** the shaft is an armature shaft (5) reaching into the gearing housing (10).

13. Auxiliary drive according to one of the preceding claims, **characterized in that** the shaft (5) at the third bearing (13, 13a) and the bearing element (14, 14a) there are designed in the region of mutually facing surfaces thereof in such a manner, that, at least in the first and/or third state of the third bearing (13, 13a), the shaft (5) bears with radial support against at least one bearing surface of the bearing element (14, 14a) and, in the second state of the third bearing (13, 13a), is at a radial distance from the bearing surfaces of the bearing element (14, 14a).

14. Auxiliary drive according to one of the preceding claims, **characterized in that** the first shaft section (5.2) has a shortened axial length in comparison to the second and/or third shaft section (5.3, 5.4).

15. Auxiliary drive according to one of the preceding claims, **characterized in that** the second and/or third shaft section (5.2, 5.4) are/is formed by an annular projection on the shaft (5).

16. Auxiliary drive according to one of the preceding claims, **characterized in that** the first and third shaft sections (5.2, 5.4) are each formed by the circumferential surface of the shaft (5) and the second shaft section (5.3) is formed by a cross-sectional constriction (16).

17. Auxiliary drive according to one of the preceding claims, **characterized in that** the bearing element (14, 14a) of the third bearing (13, 13a) forms at least two sections axially adjoining one another, specifically at least one first section which, in the first state of the third bearing (13, 13a), receives the shaft (5) with axial support, and a second section which, in the second state of the third bearing, receives the shaft (5) at a radial distance and therefore without radial support.

18. Method for producing or mounting an electric-motor auxiliary drive according to one of Claims 1-17, **characterized in that** the shaft (5) is arranged in the second housing element (10) by the second bearing (12) and the third bearing (13, 13a), which is in the first state, **in that** then the first housing element (4) which is guided on the shaft (5) by the first bearing (9) is connected to the second housing element (10), and **in that** then, by axial displacement of the shaft (5), the third bearing which is in the form of an axial supporting bearing is brought into the second state.

19. Method for producing or mounting an electric-motor auxiliary drive according to one of Claims 1-17, **characterized in that** the shaft (5) is arranged in the second housing element (10) by the second bearing (12) and the third bearing (13, 13a), which is in the first state, **in that** then the first housing element (4) which is guided on the shaft (5) by the first bearing (9) is connected to the second housing element (10), **in that** then the position of the shaft (5) is measured in order to produce at least one first measured value (x1), **in that** the third bearing (13, 13a) is subsequently brought into the second state not radially supporting the shaft (5), **in that** the position of the shaft (5) is measured again to produce at least one second measured value (x2), and **in that**, with the first and second measured values (x1, x2) being taken into consideration, a possible alignment error of the bearings (9, 12, 13, 13a) is determined.

20. Method according to Claim 19, **characterized in that** the installation of the auxiliary drive is continued and, in the process, the third bearing (13, 13a) is brought into the third state thereof if an alignment error has not been determined or a determined alignment error lies within a permissible tolerance range.

## Revendications

1. Entraînement auxiliaire électromotorisé pour véhicules, notamment entraînement d'essuie-glace, avec un moteur électrique (2) et une transmission (3), avec au moins deux éléments de carter (4, 10) reliés l'un à l'autre ainsi qu'avec un arbre (5) disposé dans un premier élément de carter (4) doté d'au moins un premier palier de roulement (9) et disposé dans un deuxième élément de carter (10) doté d'au moins un deuxième et un troisième palier de roulement (12, 13), **caractérisé en ce que** le troisième palier de roulement (13) comporte un élément de palier de roulement, notamment une douille de palier de roulement (14), entrant en interaction avec l'arbre (5), que l'arbre (5) comporte au moins deux régions d'arbre (5.2 - 5.4) connexes l'une par rapport à l'autre dans le plan axial dans la région du troisième palier de roulement (13), que dans un premier état, une première région d'arbre (5.4) forme un appui radial pour l'arbre (5), que dans un deuxième état, une deuxième région d'arbre (5.3) prévue pour l'arbre (5) ne forme aucun appui radial et que l'arbre (5) peut être déplacé dans la direction axiale par rapport à l'élément de palier de roulement au moins entre la première et la deuxième région d'arbre (5.3, 5.4).

2. Entraînement auxiliaire selon la revendication 1, **caractérisé en ce que** l'arbre (5) comporte une troisième région d'arbre (5.2) permettant de mettre en place un troisième état dans lequel celle-ci forme un appui radial pour l'arbre (5), que la troisième région d'arbre (5.2) est disposée sur le côté de la deuxième région d'arbre (5.3) opposé à la première région d'arbre (5.4) et que l'arbre (5) passe, par déplacement axial dans une seule et même direction, du premier au deuxième état et du deuxième au troisième état.

3. Entraînement auxiliaire électromotorisé pour véhicules, notamment entraînement d'essuie-glace, avec un moteur électrique (2) et une transmission (3), avec au moins deux éléments de carter reliés l'un à l'autre (4, 10) ainsi qu'avec un arbre (5), disposé dans un premier élément de carter (4) avec au moins un premier palier de roulement (9) et disposé dans un deuxième élément de carter (10) avec au moins un deuxième et un troisième palier de roulement (12, 13a), **caractérisé en ce que** le troisième palier de roulement (13a) est formé d'un élément de palier de roulement, notamment d'une douille de palier de roulement (14a), entrant en interaction avec l'arbre (5), que l'arbre (5) comporte dans la région du troisième palier de roulement (13a) trois régions d'arbre (5.2 à 5.4) connexes les unes par rapport aux autres dans le plan axial, que dans un premier état et dans un troisième état, une première région d'arbre (5.4) et une troisième région d'arbre (5.2) forment un appui radial pour l'arbre (5), que dans un deuxième état, une deuxième région d'arbre (5.3) ne forme aucun appui radial pour l'arbre (5) et que l'élément de palier de roulement peut être déplacé dans la direction axiale, dans le plan axial par rapport aux trois régions d'arbre (5.2 à 5.4).

4. Entraînement auxiliaire selon l'une quelconque des revendications précédentes, **caractérisé en ce que** les premier et/ou troisième paliers de roulement (9, 13, 13a) sont prévus à une extrémité de l'arbre (5).

5. Entraînement auxiliaire selon l'une quelconque des revendications précédentes, **caractérisé en ce que** l'état du troisième palier de roulement (13, 13a) peut être modifié par le biais d'une intervention axiale exercée sur l'arbre (5) ou sur l'élément de palier de roulement (14a) depuis le côté extérieur du premier élément de carter (4) ou du deuxième élément de carter (10).

6. Entraînement auxiliaire selon l'une quelconque des revendications précédentes, **caractérisé en ce que** le premier élément de carter est un carter de moteur (4) ou une partie d'un carter de moteur du moteur électrique (3) et que le deuxième élément de carter est un carter de transmission (10) ou une partie d'un carter de transmission de la transmission (3).

7. Entraînement auxiliaire selon l'une quelconque des revendications précédentes, **caractérisé en ce que** le premier élément de carter est un carter de transmission (10) ou une partie du carter de transmission (10) de la transmission (3) et que le deuxième élément de carter est un carter de moteur (4) ou une partie d'un carter de moteur (4) du moteur électrique (3).

8. Entraînement auxiliaire selon l'une quelconque des revendications précédentes, **caractérisé en ce que** les premier et deuxième paliers de roulement (9, 12) provoquent un appui radial de l'arbre (5).

9. Entraînement auxiliaire selon l'une quelconque des revendications précédentes, **caractérisé en ce que** les premier et/ou troisième paliers de roulement (9, 13, 13a) prennent la forme de paliers de roulement coulissants.

10. Entraînement auxiliaire selon l'une quelconque des revendications précédentes, **caractérisé en ce que** le deuxième palier de roulement (12) prend la forme d'un palier de roulement sphérique.

11. Entraînement auxiliaire selon l'une quelconque des revendications précédentes, **caractérisé par** la présence d'éléments de palier de roulement ou de pièces de palier de roulement (18, 19, 20) pour permettre l'appui axial de l'arbre (5).

12. Entraînement auxiliaire selon l'une quelconque des revendications précédentes, **caractérisé en ce que** l'arbre est un arbre d'ancre (5) entrant jusque dans le carter de transmission (10).

13. Entraînement auxiliaire selon l'une quelconque des revendications précédentes, **caractérisé en ce que** l'arbre (5) prévu au niveau du troisième palier de roulement (13, 13a) et l'élément de palier de roulement (14, 14a) situé au même endroit sont réalisés dans la région de leurs surfaces orientées l'une vers l'autre de telle sorte qu'au moins dans le premier et/ou le troisième état du troisième palier de roulement (13, 13a), l'arbre (5) repose avec son appui radial contre au moins une surface de palier de roulement de l'élément de palier de roulement (14, 14a) et présente, dans le deuxième état du troisième palier de roulement (13, 13a), une certaine distance radiale par rapport aux surfaces de palier de roulement de l'élément de palier de roulement (14, 14a).

14. Entraînement auxiliaire selon l'une quelconque des revendications précédentes, **caractérisé en ce que** la première section d'arbre (5.2) présente une longueur axiale raccourcie par rapport aux deuxième et/ou troisième sections d'arbre (5.3, 5.4).

15. Entraînement auxiliaire selon l'une quelconque des revendications précédentes, **caractérisé en ce que** les deuxième et/ou troisième sections d'arbre (5.2, 5.4) sont formées par une saillie de type annulaire réalisée au niveau de l'arbre (5).

16. Entraînement auxiliaire selon l'une quelconque des revendications précédentes, **caractérisé en ce que** les première et troisième sections d'arbre (5.2, 5.4) sont respectivement formées par la surface périphérique de l'arbre (5) et que la deuxième section d'arbre (5.3) est formée par une entaille (16) dans la section transversale.

17. Entraînement auxiliaire selon l'une quelconque des revendications précédentes, **caractérisé en ce que** l'élément de palier de roulement (14, 14a) du troisième palier de roulement (13, 13a) forme au moins deux sections connexes l'une par rapport à l'autre dans le plan axial et notamment au moins une première section logeant l'arbre (5) doté de l'appui axial dans le premier état du troisième palier de roulement (13, 13a) et une deuxième section logeant l'arbre (5) à une certaine distance radiale et ainsi sans appui radial dans le deuxième état du troisième palier de roulement.

18. Procédé de fabrication ou de montage d'un entraînement auxiliaire électromotorisé selon l'une quelconque des revendications 1 à 17, **caractérisé en ce que** l'arbre (5) doté du deuxième palier de roulement (12) et du troisième palier de roulement (13, 13a) se trouvant dans le premier état est disposé dans le deuxième élément de carter (10), que le premier élément de carter (4) guidé avec le premier palier de roulement (9) au niveau de l'arbre (5) est ensuite relié au deuxième élément de carter (10) et que le troisième palier de roulement prenant la forme d'un palier d'appui axial est alors amené dans le deuxième état par déplacement axial de l'arbre (5).

19. Procédé de fabrication ou de montage d'un entraînement auxiliaire électromotorisé selon l'une quelconque des revendications 1 à 17, **caractérisé en ce que** l'arbre (5) doté du deuxième palier de roulement (12) et du troisième palier de roulement (13, 13a) se trouvant dans le premier état est disposé dans le deuxième élément de carter (10), que le premier élément de carter (4) guidé avec le premier palier de roulement (9) au niveau de l'arbre (5) est ensuite relié au deuxième élément de carter (10), que la position de l'arbre (5) est alors mesurée pour produire au moins une première valeur de mesure (x1), que, pour finir, le troisième palier de roulement (13, 13a) est amené dans le deuxième état ne soutenant pas l'arbre (5) dans le plan radial, que la position de l'arbre (5) est à nouveau mesurée pour produire au moins une deuxième valeur de mesure (x2) et qu'une éventuelle fuite anormale du palier de roulement (9, 12, 13, 13a) est déterminée en tenant compte des première et deuxième valeurs de mesure (x1, x2).

20. Procédé selon la revendication 19, **caractérisé en ce que** le montage de l'entraînement auxiliaire est poursuivi, amenant ainsi le troisième palier de roulement (13, 13a) dans son troisième état lorsqu'une fuite anormale n'est pas déterminée ou qu'une fuite anormale déterminée se situe à l'intérieur d'une plage de tolérance admise.
